# EUROPÄISCHE PATENTSCHRIFT

(11) **EP 2 616 373 B1**
(45) Veröffentlichungstag und Bekanntmachung des Hinweises auf die Patenterteilung: **22.10.2014**
(21) Anmeldenummer: 11721507.9
(22) Anmeldetag: 19.05.2011
(51) Int. Cl.: B65G 47/91, B65H 3/08, F16B 47/00

(54) **ELEKTRISCHE ÜBERWACHUNG VON SAUGGREIFERN**
ELECTRICAL MONITORING OF SUCTION GRIPPERS
SURVEILLANCE ÉLECTRIQUE D'ORGANES DE PRÉHENSION À DÉPRESSION

(30) Priorität: 14.09.2010 DE 102010040686
(43) Veröffentlichungstag der Anmeldung: 24.07.2013
(73) Patentinhaber: Trumpf Werkzeugmaschinen GmbH + Co. KG, 71254 Ditzingen (DE)
(72) Erfinder: HEINZ, Alexander, 71638 Ludwigsburg (DE); THIEL, Walter, 71409 Schwaikheim (DE)
(74) Vertreter: Kohler Schmid Möbus
(86) Internationale Anmeldenummer: PCT/EP2011/058104
(87) Internationale Veröffentlichungsnummer: WO 2012/034716

(56) Entgegenhaltungen:
- EP-A1- 1 816 094
- DE-A1- 19 847 314
- DE-A1-102005 047 385
- JP-A- 11 271 375
- JP-A- 2010 082 782
- US-A1- 2008 174 076

## Beschreibung

Die Erfindung betrifft ein Verfahren zum Betrieb eines Sauggreifers gemäß dem Oberbegriff des Anspruchs 1.

Eine solches Verfahren ist aus der gattungsgemäßen JP 11 271375 A bekannt geworden.

Sauggreifer (auch bezeichnet als Vakuumsauger) werden dazu eingesetzt, Werkstücke anzusaugen und dadurch am Sauggreifer zu fixieren, typischerweise um das Werkstück durch Verfahren oder Verschwenken des Sauggreifers zu einem anderen Ort zu transportieren oder um das Werkstück für eine Bearbeitung oder Montage ortsfest zu halten. Der Begriff Werkstück steht hierbei für alle Arten von Gegenständen, die mit einem Sauggreifer manipuliert werden können.

Die Fixierung des Werkstücks am Sauggreifer (auch bezeichnet als Ergreifen des Werkstücks) erfolgt durch das Aufsetzen eines meist elastischen, typischerweise glockenartigen Saugkörpers des Sauggreifers, wobei der Saugkörper an seiner dem Werkstück zugewandten Seite eine Dichtlippe aufweist bzw. ausbildet, und Anlegen eines Unterdrucks im Saugraum unter dem Saugkörper, also im vom Saugkörper (einschließlich Dichtlippe) und dem Werkstück eingeschlossenen Raum. Der Saugkörper weist hierfür einen Anschluss auf, durch den Luft aus dem Saugraum abgesaugt wird. Sofern keine nennenswerten Leckagen auftreten, kann nach Erreichen des gewünschten Unterdrucks im Saugraum das Saugen unterbrochen werden, wobei das Werkstück fixiert bleibt. Zur Freigabe des Werkstücks wird wieder Luft in den Saugraum eingelassen.

Bei industriellen Anwendungen werden mit demselben Sauggreifer viele Greifprozesse hintereinander durchgeführt. Dabei kommt es zum Verschleiß am Saugkörper. Insbesondere kommt es zu Abrieb an der Dichtlippe, d.h. die Dichtlippe wird allmählich abgetragen. Ist die Dichtlippe verschlissen, kann sie den Saugraum nicht mehr ausreichend abdichten, und ein gewünschter Unterdruck im Saugraum kann nicht mehr erreicht oder nach Unterbrechung des Saugens nicht mehr gehalten werden. Bei einem Betrieb des Sauggreifers mit verschlissener Dichtlippe können Werkstücke unbeabsichtigt vom Sauggreifer fallen, oder ein Werkstück kann gar nicht mehr angehoben werden. Die Greiffunktion eines Sauggreifers kann durch Messung des erreichten Drucks im Saugraum mittels Pneumatiksensoren überwacht werden. Über einen nicht ausreichenden Unterdruck oder zu schnell ansteigenden Druck nach einer Unterbrechung des Saugens kann eine verschlissene Dichtlippe erkannt werden, und der Sauggreifer kann bis zum Ersatz der Dichtlippe außer Betrieb genommen werden. Pneumatiksensoren sind jedoch vergleichsweise teuer und störungsanfällig.

Die EP 1 826 160 A1 beschreibt einen Saugkörper, an dessen Außenseite Höhenmarkierungen angebracht sind. Durch den Verschleiß der Dichtlippe werden auch die Höhenmarkierungen abgetragen. Das Ablesen der Höhenmarkierungen durch einen Wartungsarbeiter erfordert jedoch hohen personellen Aufwand, und ist zum anderen oftmals durch kleine Dimensionen und Verschmutzungen der Saugkörper erschwert.

Ebenfalls aus der EP 1 826 160 A1 ist es bekannt, in den Saugkörper einen elektrischen Fühler zu integrieren. Durch Verschleiß der isolierenden Dichtlippe wird der Fühler freigelegt und kommt dadurch in elektrischen Kontakt mit einem leitfähigen Werkstück, wodurch ein Warnsignal ausgelöst wird. Weiterhin können in einer leitfähigen Dichtlippe zwei elektrische Fühler angeordnet werden. Durch Verschleiß der Dichtlippe geht die leitende Verbindung zwischen den Fühlern schließlich verloren, wodurch wiederum ein Warnsignal ausgelöst wird.

Nach der Auslösung eines Warnsignals kann der betroffene Sauggreifer außer Betrieb genommen werden. Dadurch kann eine verschleißbedingte Fehlfunktion eines Sauggreifers (etwa das Fallenlassen eines Werkstücks) weitgehend vermieden werden. Die verschlissene Dichtlippe kann sodann erneuert werden, und der Sauggreifer wieder in Betrieb genommen werden.

In industriellen Anwendungen werden Sauggreifer oftmals in mannlosen Schichten (insbesondere Nachtschichten und Wochenendschichten) eingesetzt. Wird während einer solchen Schicht eine verschlissene Dichtlippe festgestellt, so muss der mit dem Sauggreifer betriebene Prozess unterbrochen werden, bis ein Wartungsarbeiter die Dichtlippe erneuert hat. Dadurch entstehen kostenträchtige Verzögerungen in Montage- und Fertigungsprozessen und Maschinenstillstände.

Aus der JP 11 271375 A ist eine Vorrichtung zur Überprüfung des Abnutzungsgrades einer Ansaugdüse bekannt geworden. An einem Drehtisch sind mehrere Ansaugdüsen angeordnet, und bei Rotation des Drehtisches werden die Ansaugdüsen an einem Sensor vorbeigeführt. Aus dem Sensorsignal wird auf den Verschleißgrad der jeweils vorbeigeführten Ansaugdüse geschlossen.

Die JP 2010 082 782 A beschreibt eine Saugvorrichtung, die für eine automatische Detektion von Verschleiß oder Verschiebung eines Sauggliedes ausgebildet ist. Dabei wird mit einem Saugsensor eine Saugkraft des Sauggliedes an einer Referenzposition vermessen und mit einem Schwellwert verglichen, und weiterhin die Saugkraft des Sauggliedes in einer verschobenen Position vermessen und mit dem Schwellwert verglichen.

### Aufgabe der Erfindung

Der Erfindung liegt die Aufgabe zugrunde, ein Verfahren zum Betrieb eines Sauggreifers bereitzustellen, mit dem auf einfache Weise kostenträchtige Verzögerungen in Montage- und Fertigungsprozessen und Maschinenstillstände in mannlosen Schichten reduziert werden können.

### Kurze Beschreibung der Erfindung

Diese Aufgabe wird gelöst durch ein Verfahren der eingangs genannten Art, das dadurch gekennzeichnet ist, dass im Rahmen der elektrischen Messungen als Parameter ein elektrischer Widerstand der Dichtlippe entlang zumindest eines Teils ihres Umfangs bestimmt wird. Die Dichtlippe besteht hierfür zumindest zum Teil aus einem elektrisch leitfähigen Material, etwa einem mit Graphit oder Metallpartikeln angereichertem Kunststoff oder einem Kunststoff mit ungesättigten Kohlenstoff-Doppelbindungen. Der Widerstand entlang des Umfangs der Dichtlippe ist umgekehrt proportional zur Querschnittsfläche der umlaufenden Dichtlippe und damit näherungsweise umgekehrt proportional zur Tiefenerstreckung der Dichtlippe, so dass hierüber leicht auf die Tiefenerstreckung der Dichtlippe geschlossen werden kann.

Ebenso wird diese Aufgabe gelöst durch ein Verfahren der eingangs genannten Art, dass dadurch gekennzeichnet ist, dass im Rahmen der elektrischen Messungen als Parameter eine Kapazität oder eine Induktivität in einem Messstromkreis gemessen wird, wobei zumindest Abschnitte des Messstromkreises so nahe an der Dichtlippe angeordnet sind, dass die Tiefenerstreckung der Dichtlippe die Kapazität oder Induktivität im Messstromkreis beeinflusst. In dieser Variante, insbesondere bei Induktivitätsmessungen, kann das Anlegen einer elektrischen Spannung an der Dichtlippe, welche im Kontakt zum Werkstück steht, oder gar am Werkstück selbst, vermieden werden. Der Messstromkreis wird typischerweise als Schwingkreis betrieben. Die Bestimmung der Induktivität oder Kapazität kann über die Messung der Resonanzfrequenz des Schwingkreises oder über eine Bestimmung der Güte des Schwingkreises erfolgen. Die Menge des Dichtlippenmaterials - oder auch die durch die Dichtlippen-Tiefenerstreckung bestimmte Entfernung eines Werkstücks zum Messstromkreis - beeinflusst eine Induktivität oder eine Kapazität im Messstromkreis, insbesondere über induzierte Wirbelströme bzw. magnetische Suszeptibilitäts-Effekte oder Dielektrizitäts-Effekte.

Durch die Ermittlung des aktuellen Verschleißgrads kann die Planung des Betriebs eines Sauggreifers verbessert werden. Wenn der aktuelle Verschleißgrad quantitativ bekannt ist, kann leicht abgeschätzt werden, ob der Sauggreifer für eine anstehende Arbeitsaufgabe (etwa die Abarbeitung einer bestimmten Menge an Werkstücken in einer mannlosen Schicht) noch genügend Standzeit besitzt. Falls der aktuelle Verschleißgrad es erwarten lässt, dass die anstehende Arbeitsaufgabe nicht mehr vollständig erledigt werden kann, so kann vor Beginn der Arbeitsaufgabe noch eine Wartung vorgenommen werden (etwa die Dichtlippe erneuert werden), oder aber es wird für die anstehende Arbeitsaufgabe ein anderer Sauggreifer (bzw. eine andere Maschine, welche nicht so stark verschlissene Sauggreifer aufweist) ausgewählt. Im Rahmen der Erfindung können weiterhin - insbesondere im laufenden Betrieb - bei Erreichen von bestimmten Verschleißgraden (beispielsweise alle 20% der maximalen Anzahl von Greifprozessen) entsprechende Zustandsmeldungen ausgegeben werden, so dass ein Bediener einen guten Überblick über anstehende Wartungsarbeiten behalten kann.

Mittels des bestimmten Parameters kann auf die aktuelle Tiefenerstreckung der Dichtlippe geschlossen werden. Bevorzugt steigt oder fällt der Parameter streng monoton mit der Tiefenerstreckung der Dichtlippe, und besonders bevorzugt ändert sich der Parameter näherungsweise linear mit der Tiefenerstreckung der Dichtlippe. Der Parameter, der mittels der elektrischen Messungen bestimmt wird, ist erfindungsgemäß ein elektrischer Widerstand, eine Induktivität oder eine Kapazität.

Der Verschleißgrad wird typischerweise mittels einer elektronischen Steuerungseinrichtung ermittelt, welche auch technische Informationen über den überwachten Sauggreifer hat. Aus dem bestimmten Parameter kann mittels dieser technischen Informationen über eine Kalibrierung auf den aktuellen Verschleißgrad geschlossen werden. Der Verschleißgrad kann am einfachsten als eine für weiteren Verschleiß noch zur Verfügung stehende Tiefenerstreckung der Dichtlippe angegeben werden. Man beachte, dass für verschiedene Sauggreifertypen der Zusammenhang zwischen dem Parameter und dem Verschleißgrad grundsätzlich verschieden ist; bevorzugt sind daher für jeden angeschlossenen Sauggreifer in der elektronischen Steuerungseinrichtung die notwendigen technischen Informationen verfügbar, beispielsweise in Form einer Codierung. Die Codierung kann vom Sauggreifer an die elektronische Steuerung übermittelt werden, etwa bei der ersten Installation des Sauggreifers an der elektronischen Steuerungseinrichtung. Der Sauggreifer kann dazu einen RFID-Chip aufweisen, welcher von der Steuerungseinrichtung ausgelesen wird; ebenso ist auch eine kabelbasierte Datenübertragung möglich.

Die elektrischen Messungen selbst können ebenfalls mittels der elektronischen Steuerungseinrichtung durchgeführt werden. Die elektrischen Messungen finden typischerweise ständig aufeinanderfolgend oder in regelmäßigen Abständen, beispielsweise jeweils nach einer bestimmten Anzahl von Greifprozessen oder jeweils nach Ablauf einer bestimmten Zeit, statt, begleitend zum laufenden Betrieb des Sauggreifers. Die elektrischen Messungen können auch zu bestimmten betriebsbedingten Anlässen, etwa vor Beginn eines neuen Fertigungs- oder Montageauftrags oder vor Beginn von mannlosen Schichten, durchgeführt werden.

Die elektrischen Messungen können im Rahmen der Erfindung grundsätzlich mit gehaltenem Werkstück (etwa einem Metallblech) oder ohne gehaltenem Werkstück oder auch in beiden dieser Zustände vorgesehen sein. Für eine Parameterbestimmung bei gehaltenem Werkstück werden typischerweise Eigenschaften des Werkstücks (z.B. Ferromagnetismus, elektrische Leitfähigkeit) mit berücksichtigt oder genutzt.

### Bevorzugte Varianten der Erfindung

Bei einer vorteilhaften Variante des erfindungsgemäßen Verfahrens wird der aktuelle Verschleißgrad des Sauggreifers ständig angezeigt. Dadurch kann ein Bediener sich jederzeit einen Überblick über die voraussichtliche zukünftige Verfügbarkeit des Sauggreifers verschaffen. Im Falle einer Anordnung von mehreren Sauggreifern in einem Saugrahmen kann es vorteilhaft sein, die Verfügbarkeit des Saugrahmens als Ganzes durch den aktuellen Verschleißgrad des Sauggreifers mit dem höchsten aktuellen Verschleißgrad zu ermitteln und/oder ständig anzuzeigen und/oder für Steuerungszwecke heranzuziehen.

Besonders bevorzugt ist eine Verfahrensvariante, bei der der aktuelle Verschleißgrad als ein Prozentsatz ermittelt wird, der eine verbrauchte oder verbleibende Standzeit oder Greifprozessanzahl des Sauggreifers bezogen auf eine maximale Standzeit oder Greifprozessanzahl des Sauggreifers angibt. Diese Angabe wird typischerweise ständig angezeigt. Durch diese Variante wird der Verschleißgrad für einen Bediener leichter erfassbar und nachverfolgbar; die Wartungsplanung wird für den Bediener erleichtert. Man beachte, dass für automatisierte Vorabprüfungen von Arbeitsaufgaben der Verschleißgrad bevorzugt als eine absolute verbleibende Standzeit oder Anzahl an noch sicher durchzuführenden Greifprozessen erfasst wird. Eine anstehende Arbeitsaufgabe wird nur dann an einen Sauggreifer (bzw. eine zugehörige Maschine) vergeben, wenn die verbleibende Standzeit oder Greifprozessanzahl für die anstehende Arbeitsaufgabe noch ausreicht. Für die Umrechnung des Parameters in eine Standzeit oder eine Greifprozessanzahl kann in einer elektronischen Steuerungseinrichtung eine Umrechnungsfunktion in analytischer Form (etwa als Polynomfunktion) oder als Wertetabelle (ggf. ergänzt um Linearisierungen zwischen den Stützpunkten der Wertetabelle) hinterlegt sein. Typischerweise hängen die Standzeit und Greifprozessanzahl näherungsweise linear mit der Tiefenerstreckung der Dichtlippe zusammen.

Weiterhin ist bevorzugt eine Verfahrensvariante, bei der bei Erreichen des kritischen Verschleißgrades ein Signal gegeben wird, insbesondere ein optisches und/oder akustisches und/oder elektrisches und/oder elektromagnetisches Signal. Das Signal kann für eine sofortige (insbesondere automatische) Abschaltung des Sauggreifers (bzw. des zugehöreigen Saugrahmens) oder die Vorankündigung einer späteren (insbesondere automatischen) Abschaltung und Wartung des Sauggreifers genutzt werden. Der kritische Verschleißgrad ist bevorzugt so gewählt, dass der Sauggreifer nach Erreichen des kritischen Verschleißgrades noch für einige Zeit bzw. für einige weitere Greifprozesse sicher weiterbetrieben werden kann. Der kritische Verschleißgrad kann alternativ auch so gewählt sein, dass bei dessen Erreichen der Sauggreifer (bzw. dessen Dichtlippe) vollständig verschlissen ist und außer Betrieb genommen wird, bis die Dichtlippe erneuert wurde.

Bei einer besonders bevorzugten Ausführungsform wird zusätzlich auch die aktuelle Belegung des Sauggreifers mit einem Werkstück überwacht. Dadurch kann die Prozesssicherheit erheblich gesteigert werden. Gehen Werkstücke während ihres Transports verloren ("fallenlassen" des Werkstücks), kann dies sofort erkannt und gemeldet werden; regelmäßig muss dann der Sauggreifer (bzw. ein zugehöriger Saugrahmen) außer Betrieb genommen und gewartet werden. Auch ist es möglich, Fehlorientierungen von Werkstücken relativ zu einem Saugrahmen (aufweisend eine bekannte Anordnung mehrerer Sauggreifer) zu erkennen; in diesem Fall trägt meist nur ein Teil der Sauggreifer das jeweilige Werkstück, und ein anderer Teil der Sauggreifer bleibt unbelegt. Es können weiterhin auch falsch programmierte Sauggreifer erkannt werden, die zwar aktiviert ("besaugt") wurden, aber außerhalb der Teilegeometrie liegen; diese Sauggreifer verschlechtern das Vakuum in den mit angeschlossenen Sauggreifern und verschwenden Energie. Schließlich ist es auch möglich, einen fehlgeschlagenen Greifversuch bei Werkstücken mit schwieriger Teilekontur zu erkennen, um den Greifversuch zu wiederholen, ggf. mit verlangsamten Saug- und Hebeprozessen. Bevorzugt wird die Belegung des Sauggreifers mit elektrischen Messungen überwacht (typischerweise mit Bestimmung eines Widerstands, einer Induktivität oder einer Kapazität); die Belegung des Sauggreifers wird dann nicht über das Saugverhalten (Druckverhältnisse) am Sauggreifer überwacht, und teure pneumatische Sensorik ist dann unnötig. Zur Überwachung der Sauggreiferbelegung können die elektrischen Messungen des Parameters der Verschleißbestimmung ausgewertet werden, oder auch weitere elektrische Messungen durchgeführt werden. Soweit an einem Saugrahmen mehrere Sauggreifer installiert sind, erfolgt die Überwachung der Sauggreiferbelegung bevorzugt für jeden Sauggreifer einzeln.

Bei einer vorteilhaften Weiterentwicklung dieser Variante ist vorgesehen, dass die Überwachung der aktuellen Belegung des Sauggreifers mit einem Werkstück über die elektrischen Messungen des Parameters erfolgt, insbesondere über einen Vergleich des Parameters vor und nach einem programmierten Ergreifen eines Werkstücks. Die Überwachung der Sauggreiferbelegung kann dann ohne nennenswerten Mehraufwand mit den vorhandenen Anschlüssen bzw. Leitungspfaden des Sauggreifers und den ohnehin bestimmten Parameterwerten der Verschleißbestimmung erfolgen. Bei vielen Arten der erfindungsgemäßen elektrischen Messungen in Kombination mit typischen Werkstückarten ist beim Ergreifen des Werkstücks ein Sprung im bestimmten Parameter zu beobachten. Im Falle der Messung des Widerstands um den Umfang der Dichtlippe bei leitfähigem Dichtlippenmaterial führt das Ergreifen eines leitfähigen Stahlblechs beispielsweise zu einem gewissen Abfallen des Widerstands aufgrund eines gut leitfähigen, parallelen Strompfads.

Bei einer alternativen Weiterentwicklung der obigen Verfahrensvariante ist vorgesehen, dass die Überwachung der aktuellen Belegung des Sauggreifers mit einem Werkstück über weitere elektrische Messungen erfolgt, insbesondere wobei durch ein ergriffenes Werkstück, welches eine elektrisch leitfähige Oberfläche aufweist, ein elektrischer Kontakt am Sauggreifer geschlossen wird. Dadurch kann unter Umständen die Zuverlässigkeit der Überwachung verbessert werden; diese Variante kann auch dann eingesetzt werden, wenn eine Belegungsüberwachung mit dem Parameter der Verschleißüberwachung nicht möglich ist. Ein elektrischer Kontakt kann beispielsweise zwischen zwei voneinander isolierten, leitfähigen Dichtlippensegmenten durch ein ergriffenes Werkstück mit leitender Oberfläche (etwa durch ein Metallblech) geschlossen werden.

Bevorzugt ist auch eine Verfahrensvariante, bei der zusätzlich die Unterbrechung eines in oder an der Dichtlippe umlaufenden Meldedrahtes überwacht wird. Dadurch kann zuverlässig ein Riss in der Dichtlippe (welcher auch den Meldedraht durchtrennt) erkannt werden. Im Falle einer Dichtlippe, welche leitfähiges Material umfasst, ist der Meldedraht typischerweise isoliert.

Ganz allgemein kann es für Steuerungs- und/oder Prüfzwecke im Rahmen der Erfindung vorteilhaft sein, dass der Parameter oder ein zugehöriges Messsignal und/oder der aktuelle Verschleißgrad oder ein zugehöriges Messsignal und/oder eine aktuelle Belegung des Sauggreifers mit einem Werkstück oder ein zugehöriges Messsignal und/oder weitere Informationen, insbesondere über den Sauggreifer wie die Bauform des Sauggreifers, Abmaße, Tragkraft, Querkraft, Kippmoment, Herstellungsdatum, Baujahr oder Installationsdatum des Sauggreifers, an eine elektronische Steuerungseinrichtung übermittelt werden, insbesondere wobei diese Informationen einer Position in einem Saugrahmen zugeordnet werden. Die Datenübertragung vom Sauggreifer (oder von den Sauggreifern) zur elektronischen Steuerungseinrichtung kann insbesondere mittels ProfiBus PA erfolgen. Es braucht keine Steuerleitung verlegt zu werden; die Informationen können über die Überwachungsleitung abgefragt werden.

Eine vorteilhafte Verfahrensvariante sieht vor,
a) dass der Parameter oder ein zugehöriges Messsignal und/oder der aktuelle Verschleißgrad oder ein zugehöriges Messsignal an eine elektronische Steuerungseinrichtung übertragen wird,
b) dass die elektronische Steuerungseinrichtung prüft, ob der Sauggreifer für die vollständige Abarbeitung einer anstehenden Arbeitsaufgabe geeignet ist, wobei aus dem aktuellen Verschleißgrad des Sauggreifers und einer bei vollständiger Abarbeitung der Arbeitsaufgabe zu erwartenden Verschleißgradänderung ein projektierter Verschleißgrad des Sauggreifers ermittelt wird, welcher mit dem kritischen Verschleißgrad verglichen wird,
c) und dass, falls der Sauggreifer für die vollständige Abarbeitung der anstehenden Arbeitsaufgabe nicht geeignet ist, die Steuerungseinrichtung eine Fehlermeldung ausgibt und/oder die Abarbeitung der anstehenden Arbeitsaufgabe ablehnt. Mit dieser Variante kann verschleißbedingten Maschinenstillständen in mannlosen Schichten vorgebeugt werden. Eine voraussichtlich nicht vollständig durchführbare Arbeitsaufgabe (erkennbar an einem projektierten Verschleißgrad, der bei oder jenseits des kritischen Verschleißgrads liegt) wird automatisch erkannt/gemeldet bzw. gar nicht erst gestartet; ein Bediener kann dann vor dem Start der Abarbeitung der Arbeitsaufgabe noch eine fast verschlissene Dichtlippe austauschen.

Eine bevorzugte Weiterentwicklung dieser Variante sieht vor, dass auch Informationen über Leistungsmerkmale des Sauggreifers wie die Bauform des Sauggreifers, Abmaße, Tragkraft, Querkraft und/oder Kippmoment, in der elektronischen Steuerungseinrichtung bekannt sind,
insbesondere wobei die Informationen über die Leistungsmerkmale im oder am Sauggreifer gespeichert sind und von dort an die elektronische Steuerungseinrichtung übertragen werden,
und dass in Schritt b) auch überprüft wird, ob die Leistungsmerkmale des Sauggreifers für die Abarbeitung der anstehenden Arbeitsaufgabe geeignet sind. Mit dieser Weiterentwicklung kann sichergestellt werden, dass der Sauggreifer bei Abarbeitung der Arbeitsaufgabe nicht überfordert wird, wodurch Maschinenstillständen und Beschädigungen von Werkstücken und Maschinen vorgebeugt wird. Versehentliche Fehlausrüstungen oder fehlerhafte Programmierungen werden automatisch erkannt/gemeldet bzw. die Abarbeitung der anstehenden Arbeitsaufgabe erfolgt dann nicht. Die Übertragung von Informationen über Leistungsmerkmale des Sauggreifers (und ggf. von weiteren Informationen/Daten) vom Sauggreifer zur elektronischen Steuerungseinrichtung erfolgt bevorzugt über Kabelverbindungen, wodurch Übertragungsfehler minimiert werden.

Gemäß einer bevorzugten Weiterentwicklung der obigen Verfahrensvariante ist vorgesehen, dass die elektronische Steuerungseinrichtung für einen Saugrahmen, an welchem mehrere Sauggreifer angeordnet sind, prüft, ob der Saugrahmen gemäß seines aktuellen Zustands für die Abarbeitung der anstehenden Arbeitsaufgabe geeignet ist,
insbesondere wobei der aktuelle Zustand die Anzahl und die Positionen der Sauggreifer, deren aktuelle Verschleißgrade und deren Leistungsmerkmale beinhaltet,
und dass die elektronische Steuerungseinrichtung eine Fehlermeldung ausgibt und/oder die Abarbeitung der Arbeitsaufgabe ablehnt, wenn der Saugrahmen gemäß seines aktuellen Zustands nicht dazu geeignet ist, die anstehende Arbeitsaufgabe auszuführen. In dieser Weiterentwicklung wird geprüft, ob die Leistungsmerkmale des Saugrahmens insgesamt, die sich aus den Anzahl-, Positions- und Leistungsmerkmal-Informationen der einzelnen Sauggreifer ergeben, für die anstehende Arbeitsaufgabe geeignet sind (etwa bezüglich ausreichender Gesamt-Tragkraft, Übereinstimmung der Anordnung der Sauggreifer mit der Teilegeometrie) und ob die einzusetzenden Sauggreifer während der Abarbeitung nicht zu stark verschleißen. Durch die Vorabprüfung der Arbeitsaufgabe bezüglich einer Verträglichkeit mit dem aktuellen Zustand des Saugrahmens können Maschinenstillstände durch verschleißbedingten Arbeitsabbruch und andere Fehlermeldungen, Fehlprogrammierungen und Fehlausrüstungen verringert oder ganz vermieden werden. Man beachte, dass die (voraussichtliche) Durchführbarkeit der Arbeitsaufgabe alternativ auch manuell durch einen Bediener geprüft werden kann. Die jeweilige Position eines Sauggreifers wird bevorzugt automatisch ermittelt und aktualisiert.

Vorteilhafter Weise ist dabei vorgesehen, dass falls der Saugrahmen gemäß seines aktuellen Zustands nicht für die Abarbeitung der anstehenden Arbeitsaufgabe geeignet ist, die elektronische Steuerungseinrichtung einen Vorschlag für einen Bedienereingriff ausgibt, nach dessen Umsetzung der Saugrahmen für die Abarbeitung der Arbeitsaufgabe geeignet wäre. Dadurch wird ein geeigneter Bedienereingriff befördert und beschleunigt. Typische, von der Steuerungseinrichtung vorgeschlagene Bedienereingriffe sind der Austausch einer vollständig oder fast vollständig verschlissenen Dichtlippe sowie das Ergänzen, die Umpositionierung oder das Ersetzen eines Sauggreifers.

In den Rahmen der vorliegenden Erfindung fällt auch eine Sauggreiferanordnung, umfassend
- einen Sauggreifer mit einem Saugkörper, welcher an seiner werkstückzugewandter Seite eine umlaufende Dichtlippe aufweist,
- und Mittel zur Durchführung eines oben beschriebenen, erfindungsgemäßen Verfahrens. Der Sauggreifer kann erfindungsgemäß auch zusammen mit weiteren erfindungsgemäßen Sauggreifern an einem Saugrahmen installiert sein. Mit Hilfe dieser Sauggreiferanordnung wird die Wahrscheinlichkeit für Maschinenstillstände minimiert.

Eine bevorzugte Ausführungsform der erfindungsgemäßen Sauggreiferanordnung, die für eine Widerstandsmessung zumindest über einen Teil des Umfangs der Dichtlippe eingerichtet ist, ist dadurch gekennzeichnet, dass die Dichtlippe mit Ausnahme eines isolierenden Unterbrechungssegments umlaufend elektrisch leitfähiges Material aufweist, und dass in oder an der Dichtlippe jeweils beidseits des Unterbrechungssegments ein Messkontakt für die Messung des elektrischen Widerstands angeordnet ist. Das Unterbrechungssegment nimmt in der Regel nur einen sehr kleinen Teil des Umfangs (10% oder weniger, bevorzugt 5% oder weniger) der Dichtlippe ein. In dieser Ausführungsform erfolgt die Widerstandsmessung über die Dichtlippe seriell; dadurch kann auch ein über den Umfang ungleichmäßiger Verschleiß gut erkannt werden. Risse im leitfähigen Material senkrecht zur Umfangsrichtung der Dichtlippe führen weiterhin zu starken Widerstandsänderungen und können dadurch leicht erkannt werden.

Bei einer alternativen Ausführungsform der erfindungsgemäßen Sauggreiferanordnung, die ebenfalls für eine Widerstandsmessung zumindest über einen Teil des Umfangs der Dichtlippe eingerichtet ist, ist vorgesehen, dass die Dichtlippe vollständig umlaufend elektrisch leitfähiges Material aufweist, und dass in oder an der Dichtlippe einander gegenüberliegend zwei Messkontakte für die Messung des elektrischen Widerstands angeordnet sind. Dieser Aufbau ist besonders leicht zu fertigen.

Eine vorteilhafte Ausführungsform der erfindungsgemäßen Sauggreiferanordnung, die für eine Messung einer Kapazität oder Induktivität in einem Messstromkreis eingerichtet ist, sieht vor, dass in den Sauggreifer eine elektrisch leitfähige Zwischenschicht als Teil des Messstromkreises integriert ist. Die Zwischenschicht ist bezüglich der Dichtlippe dann genau positioniert; die Installation zusätzlicher leitfähiger Abschnitte ist nicht nötig.

Bei einer bevorzugten Weiterbildung dieser Ausführungsform ist die Zwischenschicht näherungsweise scheibenförmig oder näherungsweise ringförmig ausgebildet. Durch eine Ringform kann eine Leiterschleife eingerichtet werden, die bevorzugt wenigstens den Durchmesser der Dichtlippe aufweist; die elektrische Leitfähigkeit und magnetische Suszeptibilität des Dichtlippenmaterials sowie die Menge des Dichtlippenmaterials beeinflussen dabei die Induktivität der Leiterschleife. Durch die Scheibenform kann eine hohe kapazitive Kopplung zu einem elektrisch leitfähigen Werkstück, welches bevorzugt geerdet ist, geschaffen werden.

Eine andere, bevorzugte Ausführungsform sieht vor, dass die Dichtlippe ein mit Metallpartikeln, insbesondere ferromagnetischen Metallpartikeln, oder Graphitpartikeln versetztes Elastomer umfasst. Metallpartikel oder Graphitpartikel erhöhen die Leitfähigkeit in der Dichtlippe, was für die elektrischen Messungen ausgenutzt werden kann. Bevorzugt ist die Anzahl und Größenverteilung der Partikel geeignet, um perkolierende Leitungspfade im Dichtlippenmaterial auszubilden. Ferromagnetische Metallpartikel erhöhen die magnetische Suszeptibilität des Dichtlippenmaterials, wodurch stärkere (und daher leichter messbare) Induktivitätsänderungen hervorgerufen werden können.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1a: einen Sauggreifer in schematischer, axialer Querschnittsdarstellung, bei dem eine erfindungsgemäße Verschleißüberwachung durch eine Widerstandsmessung eingerichtet ist;
- Fig. 1b: der Sauggreifer von Fig. 1 a in schematischer, radialer Querschnittsdarstellung im Bereich der Dichtlippe entlang Linie B-B in Fig. 1a, mit vollständig umlaufend leitfähiger Dichtlippe;
- Fig. 1c: der Sauggreifer von Fig. 1a in schematischer, radialer Querschnittsdarstellung im Bereich der Dichtlippe entlang Linie B-B in Fig. 1a, in einer abgewandelten Ausführungsform mit isolierendem Unterbrechungssegment in der im Übrigen leitfähigen Dichtlippe;
- Fig. 2a: einen Sauggreifer in schematischer, axialer Querschnittsdarstellung, bei dem eine erfindungsgemäße Verschleißüberwachung durch eine Induktivitätsmessung eingerichtet ist;
- Fig. 2b: der Sauggreifer von Fig. 2a in schematischer, radialer Querschnittsdarstellung im Bereich der Zwischenschicht entlang Linie B-B in Fig. 2a;
- Fig. 2c: der Sauggreifer von Fig. 2a in schematischer, radialer Querschnittsdarstellung im Bereich der Dichtlippe entlang Linie C-C in Fig. 2a;
- Fig. 2d: eine schematische, radiale Querschnittsdarstellung der Dichtlippe aus Fig. 2c mit einem zusätzlichen, umlaufenden Meldedraht;
- Fig. 3a: ein Diagramm darstellend die Abhängigkeit des Widerstands R von der Tiefenerstreckung TE der Dichtlippe des Sauggreifers von Fig. 1c;
- Fig. 3b: ein Diagramm darstellend die Abhängigkeit des Widerstands R von der Anzahl der Greifprozesse GP des Sauggreifers von Fig. 1c;
- Fig. 4: einen Saugrahmen in schematischer Darstellung, mit mehreren Sauggreifern, welche mit einer erfindungsgemäßen Verschleißüberwachung ausgerüstet sind und mit einer elektronischen Steuerungseinrichtung verbunden sind.

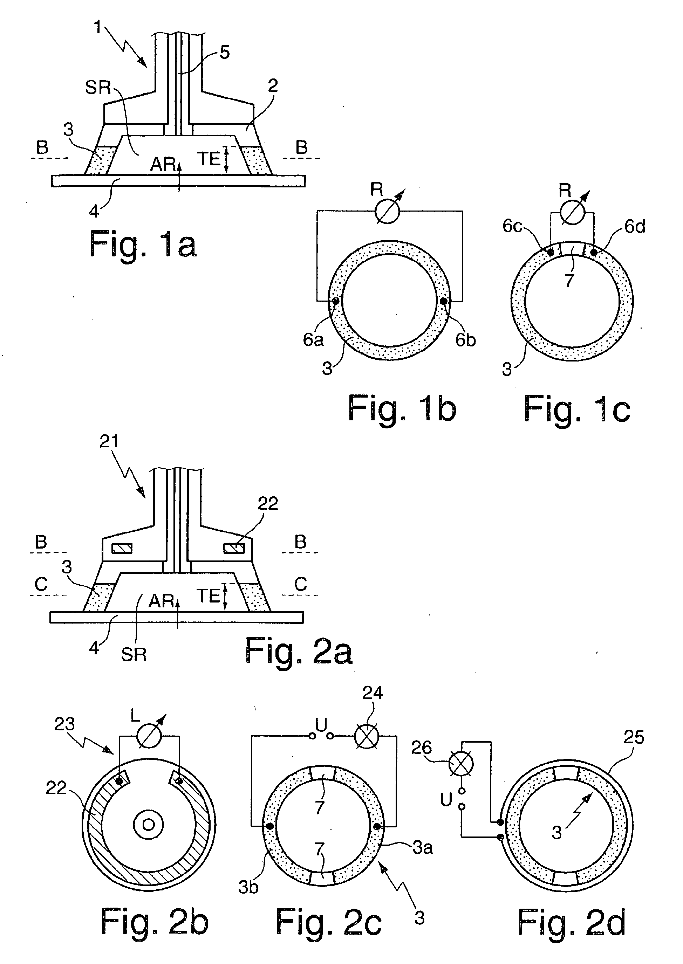

**Fig. 1a** zeigt in schematischem axialen Querschnitt (parallel zur Ansaugrichtung AR) einen Sauggreifer 1 mit Verschleißüberwachung gemäß der Erfindung.

Der Sauggreifer 1 umfasst einen Saugkörper 2 (welcher in der Regel ganz oder teilweise aus elastischem Material gefertigt ist), welcher an einer einem Werkstück 4 zugewandten Seite eine typischerweise elastische Dichtlippe 3 aufweist bzw. ausbildet. Zwischen Dichtlippe 3, Saugkörper 2 und dem Werkstück 4 ist ein Saugraum SR ausgebildet, welcher durch eine Saugleitung 5 evakuiert werden kann, so dass das Werkstück 4 (etwa eine Holzplatte) durch einen Unterdruck ("Vakuum") im Saugraum SR an den Sauggreifer 1 gezogen wird und an diesem gehalten werden kann. Mit dem Sauggreifer 1 kann das angesaugte ("ergriffene") Werkstück 4 von Ort zu Ort transportiert werden.

Beim Ergreifen und Loslassen des Werkstücks 4 kommt es zu Abrieb an der Dichtlippe 3, insbesondere an deren dem Werkstück 4 zugewandten Unterseite. Dadurch verkürzt sich im Laufe des Gebrauchs die Tiefenerstreckung TE der Dichtlippe 3. Die Tiefenerstreckung TE wird am einfachsten parallel zur Ansaugrichtung AR des Werkstücks 4 gemessen. Bei zu starker Abnutzung der Dichtlippe 3 kann diese gegenüber dem Werkstück 4 den Saugraum SR nicht mehr dicht abschließen, so dass die Greiffunktion des Sauggreifers 1 beeinträchtigt wird.

In der Ausführungsform von Fig. 1a wird der aktuelle Verschleißgrad der Dichtlippe 3 mit einer Messung des elektrischen Widerstands R über den Umfang der Dichtlippe 3 bestimmt. **Fig. 1b** zeigt dazu einen schematischen Querschnitt senkrecht zur Ansaugrichtung AR durch den Sauggreifer 1 von Fig. 1 a auf Höhe der Linie B-B in Fig. 1 a. Die Dichtlippe 3 (im einfachsten Fall nicht aber der übrige Saugkörper und auch nicht das Werkstück) ist leitfähig und besteht vollständig umlaufend aus einem leitfähigen Elastomer. In die Dichtlippe 3 integriert sind zwei einander gegenüberliegende Messkontakte 6a, 6b. Die Messkontakte 6a, 6b sind elektrisch über die zwei parallel geschalteten Hälften der Dichtlippe 3 verbunden; in die Widerstandsmessung ist somit die Dichtlippe über ihren gesamten Umfang eingebunden.

Der Widerstand R zwischen den Messkontakten 6a, 6b ist in guter Näherung umgekehrt proportional zur Querschnittsfläche der Dichtlippe 3 (vgl. Fig. 1a, wo die Dichtlippe 3 im zugehörigen Querschnitt zu sehen ist); diese Querschnittsfläche nimmt mit abnehmender Tiefenerstreckung TE (hier) linear ab. Aus dem Widerstand R kann somit auf die aktuelle Tiefenerstreckung TE (also den aktuellen Verschleißgrad) der Dichtlippe 3 geschlossen werden. Falls auch andere Teile des Saugkörpers 2 oder das Werkstück 4 (bzw. dessen Oberfläche) eine merkliche elektrische Leitfähigkeit aufweisen, müssen die entsprechenden parallelen Strompfade bzw. deren Widerstand entsprechend den Kirchhoffschen Regeln bei der Bestimmung der Tiefenerstreckung TE aus dem gemessenen Widerstand R mit berücksichtigt werden.

**Fig. 1c** zeigt in einem Querschnitt entsprechend Fig. 1b eine alternative Ausgestaltung der Dichtlippe 3 bzw. der Widerstandsmessung. In dieser Ausführungsform enthält die Dichtlippe 3 ein elektrisch isolierendes Unterbrechungssegment 7; im übrigen ist die Dichtlippe 3 umlaufend mit elektrisch leitfähigem Material ausgebildet. Die Messkontakte 6c, 6d befinden sich beidseits des Unterbrechungssegments 7 in geringem Abstand zum Unterbrechungssegment 7. Der leitfähige Teil der Dichtlippe 3 wird hier unverzweigt (rein seriell) vermessen. Auch hier ist der gemessene Widerstand R in guter Näherung umgekehrt proportional zur aktuellen Tiefenerstreckung TE.

Man beachte, dass alternativ zu einer Widerstandsmessung entlang des Umfangs einer Dichtlippe auch eine axiale Widerstandsmessung zwischen einem gehaltenen, leitfähigen Werkstück und einem oberen Bereich einer Dichtlippe möglich ist, mit der auf die Tiefenerstreckung der Dichtlippe geschlossen werden kann (nicht dargestellt).

Ein Sauggreifer bildet zusammen mit den zugehörigen Mitteln zur Verschleißüberwachung seiner Dichtlippe (auch bezeichnet als Sauglippe) eine erfindungsgemäße Sauggreiferanordnung.

**Fig. 2a** zeigt einen schematischen Querschnitt parallel zur Ansaugrichtung AR durch einen weiteren Sauggreifer 21 mit einer Verschleißüberwachung gemäß der Erfindung. Es werden vor allem die Unterschiede zu Fig. 1a erläutert.

In den Sauggreifer 21 ist eine näherungsweise ringförmige, leitfähige Zwischenschicht 22 integriert. Diese bildet eine Leiterschleife in einem Messstromkreis 23 aus (vgl. **Fig. 2b****,** die den Querschnitt bei B-B in Fig. 2a zeigt); die Induktivität L der Leiterschleife des Messstromkreises 23 wird gemessen. Zur Messung der Induktivität L wird beispielsweise die Güte im Messstromkreis, welcher beispielsweise als LC-Serienschwingkreis ausgebildet ist, über die Messung der Stromstärke bestimmt; ebenso ist die Bestimmung der Resonanzfrequenz des Schwingkreises möglich.

Die Induktivität L der Zwischenschicht 22 hängt von der Menge und der Verteilung von Material mit einer merklichen elektrischen Leitfähigkeit (und dessen magnetischer Suszeptibilität) in der Umgebung der Zwischenschicht 22 ab. Das Material der Dichtlippe 3 ist hier elektrisch leitfähig und weist ferromagnetische Einschlüsse (etwa Eisenpartikel) auf. Ein Abtrag von Dichtlippenmaterial führt zu einem Absinken der gemessenen Induktivität L der Zwischenschicht 22. Auf diese Weise kann über die Messung der Induktivität L auf den Verschleißgrad geschlossen werden.

Man beachte, dass Werkstücke 4 aus nicht leitfähigen Werkstoffen (etwa trockenem Holz) die Induktivitätsmessung nicht beeinflussen, so dass in diesem Falle eine Bestimmung des Verschleißgrades gleichermaßen (mit den gleichen Berechnungen) mit und ohne ergriffenem Werkstück 4 erfolgen kann. Ergriffene (oder zumindest nahe an der Zwischenschicht 22 angeordnete) Werkstücke 4 aus leitfähigem (und eventuell auch ferromagnetischem) Material (etwa Eisenbleche) bewirken hingegen einen starken Anstieg der Induktivität L; dieser Anstieg kann dazu genutzt werden, um die Belegung des Sauggreifers festzustellen bzw. zu überwachen. Bei bekanntem Werkstücktypus kann der Einfluss des Werkstücks 4 aus der gemessenen Induktivität L herausgerechnet werden, so dass auch bei ergriffenem Werkstück der Verschleißgrad quantitativ bestimmbar ist.

Falls die Belegungsüberwachung nicht über die Induktivitätsmessung erfolgen soll (etwa um den Einfluss unterschiedlicher Werkstücktypen auf die Induktivitätsmessung nicht erfassen zu müssen), kann zur Überwachung der Belegung des Sauggreifers 21 mit einem elektrisch leitfähigen Werkstück 4 die Dichtlippe wie in **Fig. 2c** dargestellt aufgebaut sein; Fig. 2c zeigt einen Querschnitt durch den Sauggreifer 21 von Fig. 2a auf Höhe der Dichtlippe 3 bei Linie C-C in Fig. 2a.

Die Dichtlippe 3 umfasst zwei Halbsegmente 3a, 3b aus leitfähigem Material, die durch zwei einander gegenüberliegende Unterbrechungssegmente 7 aus elektrisch isolierendem Material getrennt sind. Nur wenn ein Werkstück mit leitfähiger Oberfläche an beiden Halbsegmenten 3a, 3b anliegt, wird ein elektrischer Kontakt zwischen beiden Halbsegmenten 3a, 3b geschlossen, was beispielsweise durch eine Kontrollleuchte 24 angezeigt wird. Alternativ oder zusätzlich kann eine signaltechnische Auswertung erfolgen, bei der eine Fehlermeldung ausgegeben wird, wenn der Sauggreifer 21 entgegen seiner Programmierung kein Werkstück 4 trägt.

In **Fig. 2d** ist eine mögliche Zusatzausstattung zur Dichtlippe 3 aus Fig. 2c gezeigt. Um die Dichtlippe 3 herum ist ein dünner, isolierter Meldedraht 25 geführt (die Isolierung ist nicht näher dargestellt). Über den Meldedraht 25 wird hier eine Kontrollleuchte 26 betrieben. Im Falle eines Risses der Dichtlippe 3 in radialer Richtung reißt auch der Meldedraht 25, und die Kontrollleuchte 26 erlischt aufgrund der Stromunterbrechung. Ein Bediener wird dadurch auf den Riss hingewiesen und kann dann die Dichtlippe 3 austauschen. Alternativ oder zusätzlich zur Kontrollleuchte 26 kann auch eine signaltechnische Auswertung in einer elektronischen Steuereinrichtung erfolgen.

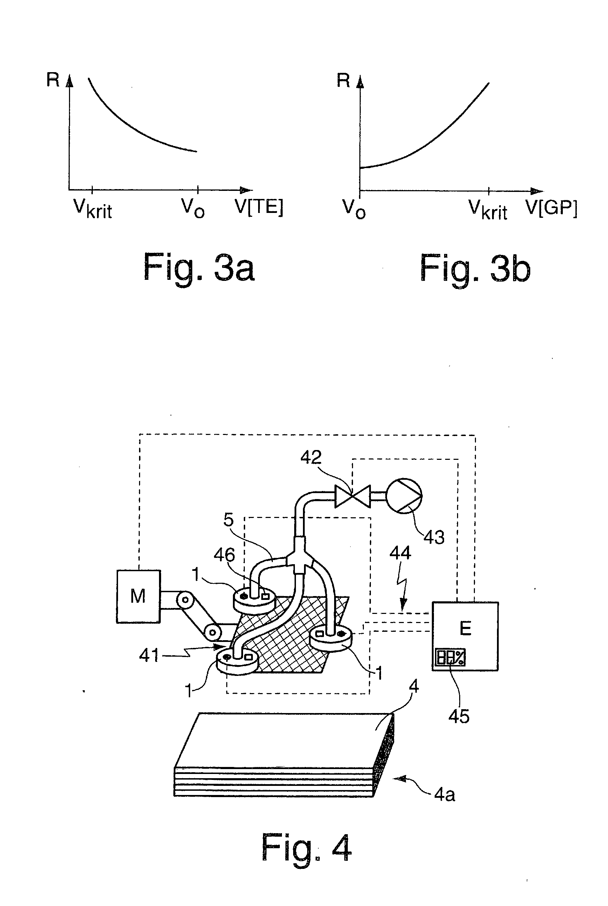

Die **Fig. 3a** illustriert den Zusammenhang zwischen dem gemäß der Erfindung in Fig. 1a und Fig. 1c bestimmten Parameter, dem Widerstand R, und dem Verschleißgrad V, ausgedrückt als verbliebene Tiefenerstreckung TE der Dichtlippe. Der Widerstand R ändert sich kontinuierlich mit der Tiefenerstreckung der Dichtlippe; der Widerstand R nimmt von der Tiefenerstreckung einer neuen Dichtlippe (bei V₀) mit abnehmender Tiefenerstreckung (also zunehmendem Verschleißfortschritt) zu. Bei einem kritischen Verschleißgrad Vₖᵣᵢₜ, ab dem der Betrieb des Sauggreifers als nicht mehr (oder alsbald als nicht mehr) sicher eingestuft wird, kann ein Warnsignal ausgegeben werden. Mittels des Parameters (hier Widerstand R) ist grundsätzlich jederzeit eine quantitative Aussage über den Verschleißgrad der Dichtlippe möglich.

Ist auch der Zusammenhang zwischen Tiefenerstreckung TE und der Anzahl der Greifprozesse GP bekannt (etwa aus Kalibriermessungen für den verwendeten Sauggreifertyp, nötigenfalls unter Berücksichtigung der Art des Werkstücks und der Art der Werkstückhandhabung), kann der Verschleißgrad auch über die (bisher erfolgten) Greifprozesse GP ausgedrückt werden, vgl. **Fig. 3****b.** Der Widerstand R steigt zwischen null Greifprozessen (bei V₀) mit zunehmender Zahl der Greifprozesse GP kontinuierlich an. Ab einer kritischen Zahl von erfolgten Greifprozessen (bei Vₖᵣᵢₜ) wird der Betrieb des Sauggreifers nicht mehr (oder alsbald nicht mehr) als sicher eingestuft.

Bevorzugt wird der Verschleißgrad als eine relative Größe, etwa als Quotient der bisher erfolgten Greifprozesse GP und der kritischen Anzahl von Greifprozessen (also GP bei Vₖᵣᵢₜ) angegeben. Ebenso kann eine verbleibende Anzahl an noch sicher auszuführenden Greifprozessen angegeben werden, also die Differenz der kritischen Anzahl von Greifprozessen (GP bei Vₖᵣᵢₜ) und der bisher erfolgten Greifprozesse. Letztere Größe kann auch gut von automatischen Steuerungseinrichtungen für die Planung von Arbeitsaufgaben eingesetzt werden.

**Fig. 4** zeigt in schematischer Darstellung einen Saugrahmen 41, am dem an verschiedenen Positionen Sauggreifer 1 (beispielsweise wie in Fig. 1 a dargestellt) installiert sind, welche erfindungsgemäß auf Verschleiß überwacht werden.

Der Saugrahmen 41 ist mittels einer Robotermotorik M verfahrbar und/oder verschwenkbar, insbesondere zum Absenken des Saugrahmens 41 auf ein oberstes Werkstück 4 (hier Bleche) eines Werkstückstapels 4a und zum Verbringen des Werkstücks 4 an einen nicht näher dargestellten Ort der Weiterbearbeitung. Die Robotermotorik M wird über eine elektronische Steuerungseinrichtung E angesteuert. Die elektronische Steuerungseinrichtung E kontrolliert weiterhin ein Ventil 42, über welches die zusammengeführten Saugleitungen 5 der Sauggreifer 1 gemeinsam mit einer saugenden Vakuumpumpe 43 verbunden sind. Alternativ oder zusätzlich kann für jeden Sauggreifer 1 ein eigenes, von der Steuerungseinrichtung E kontrolliertes Ventil vorgesehen sein, um die einzelnen Sauggreifer 1 zu aktivieren oder zu deaktivieren (nicht eingezeichnet).

Die Sauggreifer 1 sind weiterhin über eine gemeinsame Datenleitung 44, etwa einen ProfiBus PA, mit der elektronischen Steuerungseinrichtung E verbunden. Über die Datenleitung 44 werden jeweils die Messsignale zur Bestimmung des Parameters, mittels dessen der Verschleißgrad des jeweiligen Sauggreifers 1 ermittelt wird, an die elektronische Steuerungseinrichtung E übertragen. Im gezeigten Ausführungsbeispiel erhält die Steuerungseinrichtung E über die Datenleitung 44 auch technische Informationen über die Sauggreifer 1 an den verschiedenen Positionen im Saugrahmen 41; die Steuerungseinrichtung E ist dadurch automatisch über alle gegenwärtig installierten Sauggreifer 1 informiert. Die Sauggreifer 1 sind hier zur Bereitstellung dieser Informationen jeweils mit einem Speicherchip 46 ausgerüstet. Die besagten Informationen über einen Sauggreifer 1 können insbesondere umfassen (ggf. auch kodiert):
- Typus des Sauggreifers (Hersteller/Bezeichnung), Baujahr, Inbetriebnahmedatum;
- Bauform des Sauggreifers (Glattblech-, Riffelblech-, Magnet-Schwerlastsauger);
- Ansaugdurchmesser, minimaler Durchmesser
- Maximale Haltekraft, maximal zulässige Querkraft, Kippmoment.
Weiterhin können gegebenenfalls separate Messsignale zur Bestimmung der Belegung der Sauggreifer übertragen werden.

Mittels der technischen Informationen kann die Steuerungseinrichtung E insbesondere geeignete Kalibrierungen für die Bestimmung des Verschleißgrades und/oder der Belegung eines jeden Sauggreifers 1 aus den übertragenen Messsignalen in ihrer Datenbank auswählen. Die elektronische Steuerungseinrichtung E bestimmt im gezeigten Ausführungsbeispiel aus dem Parameter für jeden einzelnen Sauggreifer 1 den aktuellen Verschleißgrad, und für den gesamten Saugrahmen 41 wird der aktuelle Verschleißgrad des am meisten verschlissenen Sauggreifers 1 an einem Display 45 ständig angezeigt.

Bei Programmierung einer neuen Arbeitsaufgabe für den Saugrahmen 41 prüft die elektronische Steuerungseinrichtung E zunächst, ob der Saugrahmen 41 für die Arbeitsaufgabe an sich geeignet ist, insbesondere ob die Bauform der aktuell montierten Sauggreifer 1 zu den zu transportierenden Werkstücken 4 passt, ob die Gesamthaltekraft ausreicht und die bei den Transportprozessen auftretenden Querkräfte aufgenommen werden können (hierbei werden die übertragenen technischen Informationen über die Sauggreifer 1 genutzt; dank der automatischen Übermittlung der Daten von den Sauggreifern 1 zur Steuerungseinrichtung E ist eine manuelle Eingabe dieser Informationen überflüssig). Falls der Saugrahmen 41 für die anstehende Arbeitsaufgabe an sich ungeeignet ist, wird eine Fehlermeldung ausgegeben; ein Bediener kann dann ggf. eine Umrüstung vornehmen oder die Arbeitsaufgabe einem anderen Saugrahmen zuweisen (sofern vorhanden).

Anschließend wird geprüft, ob der aktuelle Verschleißgrad der (an der Arbeitsaufgabe beteiligten) Sauggreifer 1 die vollständige Abarbeitung der Arbeitsaufgabe voraussichtlich zulässt. Hierbei wird bevorzugt eine Anzahl von verbliebenden, noch sicher auszuführenden Greifprozessen mit der in der anstehenden Arbeitsaufgabe durchzuführenden Greifprozesse für jedem Sauggreifer 1 verglichen. Ergibt sich bei einem oder mehreren der Sauggreifer 1, dass die anstehende Arbeitsaufgabe verschleißbedingt nicht zu Ende geführt werden kann, so wird eine Fehlermeldung ausgegeben. Ein Bediener kann dann vor Beginn der Arbeitsaufgabe noch eine Wartung der betroffenen Sauggreifer 1 durchführen (etwa ein Austausch der Dichtlippe), oder die Arbeitsaufgabe einem anderen Saugrahmen zuweisen (sofern vorhanden).

## Patentansprüche

1. Verfahren zum Betrieb eines Sauggreifers (1; 21), umfassend einen Saugkörper (2), welcher an einer werkstückzugewandten Seite eine umlaufende Dichtlippe (3) aufweist,
wobei eine Tiefenerstreckung (TE) der Dichtlippe (3) bei Gebrauch des Sauggreifers (1; 21) durch Verschleiß abnimmt,
wobei das Erreichen eines kritischen Verschleißgrads (Vₖᵣᵢₜ) der Dichtlippe (3) mittels elektrischer Messungen überwacht wird,
wobei mittels der elektrischen Messungen ein von der Tiefenerstreckung (TE) der Dichtlippe (3) kontinuierlich abhängiger Parameter bestimmt wird,
und wobei aus dem Parameter der aktuelle Verschleißgrad (V) der Dichtlippe (3) ermittelt wird,
**dadurch gekennzeichnet,**
**dass** im Rahmen der elektrischen Messungen als Parameter ein elektrischer Widerstand (R) der Dichtlippe (3) entlang zumindest eines Teils ihres Umfangs bestimmt wird.

2. Verfahren zum Betrieb eines Sauggreifers (1; 21), umfassend einen Saugkörper (2), welcher an einer werkstückzugewandten Seite eine umlaufende Dichtlippe (3) aufweist,
wobei eine Tiefenerstreckung (TE) der Dichtlippe (3) bei Gebrauch des Sauggreifers (1; 21) durch Verschleiß abnimmt,
wobei das Erreichen eines kritischen Verschleißgrads (Vₖᵣᵢₜ) der Dichtlippe (3) mittels elektrischer Messungen überwacht wird,
wobei mittels der elektrischen Messungen ein von der Tiefenerstreckung (TE) der Dichtlippe (3) kontinuierlich abhängiger Parameter bestimmt wird,
und wobei aus dem Parameter der aktuelle Verschleißgrad (V) der Dichtlippe (3) ermittelt wird,
**dadurch gekennzeichnet,**
**dass** im Rahmen der elektrischen Messungen als Parameter eine Kapazität oder eine Induktivität (L) in einem Messstromkreis (23) gemessen wird,
wobei zumindest Abschnitte des Messstromkreises (23) so nahe an der Dichtlippe (3) angeordnet sind, dass die Tiefenerstreckung (TE) der Dichtlippe (3) die Kapazität oder Induktivität (L) im Messstromkreis (23) beeinflusst.

3. Verfahren nach Anspruch 1 oder 2, **dadurch gekennzeichnet, dass** der aktuelle Verschleißgrad (V) des Sauggreifers (1; 21) ständig angezeigt wird.

4. Verfahren nach einem der vorhergehenden Ansprüche, **dadurch gekennzeichnet, dass** der aktuelle Verschleißgrad (V) als ein Prozentsatz ermittelt wird, der eine verbrauchte oder verbleibende Standzeit oder Greifprozessanzahl (GP) des Sauggreifers (1; 21) bezogen auf eine maximale Standzeit oder Greifprozessanzahl des Sauggreifers (1; 21) angibt.

5. Verfahren nach einem der vorhergehenden Ansprüche, **dadurch gekennzeichnet, dass** bei Erreichen des kritischen Verschleißgrades (Vₖᵣᵢₜ) ein Signal gegeben wird, insbesondere ein optisches und/oder akustisches und/oder elektrisches und/oder elektromagnetisches Signal.

6. Verfahren nach einem der vorhergehenden Ansprüche, **dadurch gekennzeichnet, dass** zusätzlich auch die aktuelle Belegung des Sauggreifers (1; 21) mit einem Werkstück (4) überwacht wird,

7. Verfahren nach Anspruch 6, **dadurch gekennzeichnet, dass** die Überwachung der aktuellen Belegung des Sauggreifers (1; 21) mit einem Werkstück (4) über die elektrischen Messungen des Parameters erfolgt, insbesondere über einen Vergleich des Parameters vor und nach einem programmierten Ergreifen eines Werkstücks (4).

8. Verfahren nach Anspruch 6, **dadurch gekennzeichnet, dass** die Überwachung der aktuellen Belegung des Sauggreifers (1; 21) mit einem Werkstück (4) über weitere elektrische Messungen erfolgt, insbesondere wobei durch ein ergriffenes Werkstück (4), welches eine elektrisch leitfähige Oberfläche aufweist, ein elektrischer Kontakt am Sauggreifer (1; 21) geschlossen wird.

9. Verfahren nach einem der vorhergehenden Ansprüche, **dadurch gekennzeichnet, dass** zusätzlich die Unterbrechung eines in oder an der Dichtlippe (3) umlaufenden Meldedrahtes (25) überwacht wird.

10. Verfahren nach einem der vorhergehenden Ansprüche,
**dadurch gekennzeichnet,**
a) **dass** der Parameter oder ein zugehöriges Messsignal und/oder der aktuelle Verschleißgrad (V) oder ein zugehöriges Messsignal an eine elektronische Steuerungseinrichtung (E) übertragen wird,
b) **dass** die elektronische Steuerungseinrichtung (E) prüft, ob der Sauggreifer (1; 21) für die vollständige Abarbeitung einer anstehenden Arbeitsaufgabe geeignet ist, wobei aus dem aktuellen Verschleißgrad (V) des Sauggreifers (1; 21) und einer bei vollständiger Abarbeitung der Arbeitsaufgabe zu erwartenden Verschleißgradänderung ein projektierter Verschleißgrad des Sauggreifers (1; 21) ermittelt wird, welcher mit dem kritischen Verschleißgrad (Vₖᵣᵢₜ) verglichen wird,
c) und **dass**, falls der Sauggreifer (1; 21) für die vollständige Abarbeitung der anstehenden Arbeitsaufgabe nicht geeignet ist, die Steuerungseinrichtung (E) eine Fehlermeldung ausgibt und/oder die Abarbeitung der anstehenden Arbeitsaufgabe ablehnt.

11. Verfahren nach Anspruch 10, **dadurch gekennzeichnet,**
**dass** auch Informationen über Leistungsmerkmale des Sauggreifers (1; 21) wie die Bauform des Sauggreifers (1; 21), Abmaße, Tragkraft, Querkraft und/oder Kippmoment, in der elektronischen Steuerungseinrichtung (E) bekannt sind,
insbesondere wobei die Informationen über die Leistungsmerkmale im oder am Sauggreifer (1; 21) gespeichert sind und von dort an die elektronische Steuerungseinrichtung (E) übertragen werden,
und **dass** in Schritt b) auch überprüft wird, ob die Leistungsmerkmale des Sauggreifers (1; 21) für die Abarbeitung der anstehenden Arbeitsaufgabe geeignet sind.

12. Verfahren nach einem der Ansprüche 10 oder 11, **dadurch gekennzeichnet,**
**dass** die elektronische Steuerungseinrichtung (E) für einen Saugrahmen (41), an welchem mehrere Sauggreifer (1; 21) angeordnet sind, prüft, ob der Saugrahmen (41) gemäß seines aktuellen Zustands für die Abarbeitung der anstehenden Arbeitsaufgabe geeignet ist, insbesondere wobei der aktuelle Zustand die Anzahl und die Positionen der Sauggreifer (1; 21), deren aktuelle Verschleißgrade (V) und deren Leistungsmerkmale beinhaltet,
und **dass** die elektronische Steuerungseinrichtung (E) eine Fehlermeldung ausgibt und/oder die Abarbeitung der Arbeitsaufgabe ablehnt, wenn der Saugrahmen (41) gemäß seines aktuellen Zustands nicht dazu geeignet ist, die anstehende Arbeitsaufgabe auszuführen.

13. Verfahren nach Anspruch 12, **dadurch gekennzeichnet, dass** falls der Saugrahmen (41) gemäß seines aktuellen Zustands nicht für die Abarbeitung der anstehenden Arbeitsaufgabe geeignet ist, die elektronische Steuerungseinrichtung (E) einen Vorschlag für einen Bedienereingriff ausgibt, nach dessen Umsetzung der Saugrahmen (41) für die Abarbeitung der Arbeitsaufgabe geeignet wäre.

14. Sauggreiferanordnung, umfassend
- einen Sauggreifer (1; 21) mit einem Saugkörper (2), welcher an seiner werkstückzugewandter Seite eine umlaufende Dichtlippe (3) aufweist,
- und Mittel zur Durchführung eines Verfahrens nach einem der vorhergehenden Ansprüche, welche eine elektronische Steuereinrichtung beinhalten, die den Verschleißgrad ermittelt.

15. Sauggreiferanordnung nach Anspruch 14 in Verbindung mit Anspruch 1, **dadurch gekennzeichnet, dass** die Dichtlippe (3) mit Ausnahme eines isolierenden Unterbrechungssegments (7) umlaufend elektrisch leitfähiges Material aufweist, und dass in oder an der Dichtlippe (3) jeweils beidseits des Unterbrechungssegments (7) ein Messkontakt (6c, 6d) für die Messung des elektrischen Widerstands (R) angeordnet ist.

16. Sauggreiferanordnung nach Anspruch 14 in Verbindung mit Anspruch 1, **dadurch gekennzeichnet, dass** die Dichtlippe (3) vollständig umlaufend elektrisch leitfähiges Material aufweist, und dass in oder an der Dichtlippe (3) einander gegenüberliegend zwei Messkontakte (6a, 6b) für die Messung des elektrischen Widerstands (R) angeordnet sind.

17. Sauggreiferanordnung nach Anspruch 14 in Verbindung mit Anspruch 2, **dadurch gekennzeichnet, dass** in den Sauggreifer (1; 21) eine elektrisch leitfähige Zwischenschicht (22) als Teil des Messstromkreises (23) integriert ist.

18. Sauggreiferanordnung nach Anspruch 17, **dadurch gekennzeichnet, dass** die Zwischenschicht (22) näherungsweise scheibenförmig oder näherungsweise ringförmig ausgebildet ist.

19. Sauggreiferanordnung nach einem der Ansprüche 14 bis 18, **dadurch gekennzeichnet, dass** die Dichtlippe (3) ein mit Metallpartikeln, insbesondere ferromagnetischen Metallpartikeln, oder Graphitpartikeln versetztes Elastomer umfasst.

## Claims

1. Method for operating a suction gripper (1; 21) comprising
a suction member (2) which has at a side facing a workpiece a peripheral sealing lip (3),
a depth extent (TE) of the sealing lip (3) decreasing as a result of wear when the suction gripper (1; 21) is used,
the reaching of a critical degree of wear (Vₖᵣᵢₜ) of the sealing lip (3) being monitored by means of electrical measurements,
a parameter which is continuously dependent on the depth extent (TE) of the sealing lip (3) being determined by means of the electrical measurements,
and the current degree of wear (V) of the sealing lip (3) being established from the parameter,
**characterised in that**,
in the context of the electrical measurements, an electrical resistance (R) of the sealing lip (3) is determined as a parameter along at least a portion of the periphery thereof.

2. Method for operating a suction gripper (1; 21) comprising
a suction member (2) which has at a side facing a workpiece a peripheral sealing lip (3),
a depth extent (TE) of the sealing lip (3) decreasing as a result of wear when the suction gripper (1; 21) is used,
the reaching of a critical degree of wear (Vₖᵣᵢₜ) of the sealing lip (3) being monitored by means of electrical measurements,
a parameter which is continuously dependent on the depth extent (TE) of the sealing lip (3) being determined by means of the electrical measurements,
and the current degree of wear (V) of the sealing lip (3) being established from the parameter,
**characterised in that**,
in the context of the electrical measurements, a capacitance or an inductivity (L) is measured as a parameter in a measurement current circuit (23),
at least portions of the measurement current circuit (23) being arranged so close to the sealing lip (3) that the depth extent (TE) of the sealing lip (3) influences the capacitance or the inductivity (L) in the measurement current circuit (23).

3. Method according to claim 1 or claim 2, **characterised in that** the current degree of wear (V) of the suction gripper (1; 21) is indicated constantly.

4. Method according to any one of the preceding claims, **characterised in that** the current degree of wear (V) is established as a percentage, which indicates a used or remaining service-life or gripping process number (GP) of the suction gripper (1; 21) with respect to a maximum service-life or gripping process number of the suction gripper (1; 21).

5. Method according to any one of the preceding claims, **characterised in that**, when the critical degree of wear (Vₖᵣᵢₜ) is reached, a signal is transmitted, in particular an optical and/or acoustic and/or electrical and/or electromagnetic signal.

6. Method according to any one of the preceding claims, **characterised in that** the current occupation of the suction gripper (1; 21) with a workpiece (4) is also further monitored.

7. Method according to claim 6, **characterised in that** the monitoring of the current occupation of the suction gripper (1; 21) with a workpiece (4) is carried out by means of the electrical measurements of the parameter, in particular by means of a comparison of the parameter before and after a programmed gripping of a workpiece (4).

8. Method according to claim 6, **characterised in that** the monitoring of the current occupation of the suction gripper (1; 21) with a workpiece (4) is carried out by means of additional electrical measurements, in particular with an electrical contact on the suction gripper (1; 21) being closed by means of a gripped workpiece (4) which has an electrically conductive surface.

9. Method according to any one of the preceding claims, **characterised in that** the interruption of a sensor wire (25) which extends in or on the sealing lip (3) is further monitored.

10. Method according to any one of the preceding claims, **characterised in that**
a) the parameter or an associated measurement signal and/or the current degree of wear (V) or an associated measurement signal is transmitted to an electronic control device (E),
b) **in that** the electronic control device (E) verifies whether the suction gripper (1; 21) is suitable for the complete processing of a pending operating task, there being established, from the current degree of wear (V) of the suction gripper (1; 21) and a wear degree change which is to be anticipated when the operating task is fully processed, a projected degree of wear of the suction gripper (1; 21) which is compared with the critical degree of wear (Vₖᵣᵢₜ),
c) and **in that**, if the suction gripper (1; 21) is not suitable for the complete processing of the pending operating task, the control device (E) transmits an error message and/or declines the processing of the pending operating task.

11. Method according to claim 10, **characterised in that** information relating to performance features of the suction gripper (1; 21) such as the structural shape of the suction gripper (1; 21), dimensions, carrying force, transverse force and/or tilting moment are also known in the electronic control device (E),
in particular with the information relating to the performance features being stored in or on the suction gripper (1; 21) and being transmitted from there to the electronic control device (E),
and **in that**, in step b), it is also verified whether the performance features of the suction gripper (1; 21) are suitable for the processing of the pending operating task.

12. Method according to either claim 10 or claim 11,
**characterised in that**
the electronic control device (E) for a suction frame (41) on which a plurality of suction grippers (1; 21) are arranged verifies whether the suction frame (41) according to its current status is suitable for the processing of the pending operating task,
in particular with the current status containing the number and the positions of the suction grippers (1; 21), the current degree of wear (V) thereof and the performance features thereof,
and **in that** the electronic control device (E) transmits an error message and/or declines the processing of the operating task when the suction frame (41) according to the current status thereof is not suitable for carrying out the pending operating task.

13. Method according to claim 12, **characterised in that**, if the suction frame (41) according to the current status thereof is not suitable for processing the pending operating task, the electronic control device (e) transmits a proposal for a user intervention, after the implementation of which the suction frame (41) would be suitable for the processing of the operating task.

14. Suction gripper arrangement comprising:
- a suction gripper (1; 21) having a suction member (2) which has a peripheral sealing lip (3) at the side thereof facing the workpiece,
- and means for carrying out a method according to any one of the preceding claims, which contain an electronic control device which establishes the degree of wear.

15. Suction gripper arrangement according to claim 14 together with claim 1, **characterised in that** the sealing lip (3) with the exception of an insulating interruption segment (7) has over the periphery electrically conductive material, and **in that** in or on the sealing lip (3) a measurement contact (6c, 6d) is arranged at each of the two sides of the interruption segment (7) for the measurement of the electrical resistance (R).

16. Suction gripper arrangement according to claim 14 together with claim 1, **characterised in that** the sealing lip (3) has electrically conductive material over the complete periphery and **in that** in or on the sealing lip (3) two measurement contacts (6a, 6b) are arranged so as to face each other for the measurement of the electrical resistance (R).

17. Suction gripper arrangement according to claim 14 together with claim 2, **characterised in that** an electrically conductive intermediate layer (22) is integrated in the suction gripper (1; 21) as part of the measurement current circuit (23).

18. Suction gripper arrangement according to claim 17, **characterised in that** the intermediate layer (22) is constructed in a substantially disc-like or substantially annular manner.

19. Suction gripper arrangement according to any one of claims 14 to 18, **characterised in that** the sealing lip (3) comprises an elastomer material which is charged with metal particles, in particular ferromagnetic metal particles, or graphite particles.

## Revendications

1. Procédé de fonctionnement d'un organe de préhension à dépression (1 ; 21), comprenant un corps d'aspiration (2) qui présente une lèvre d'étanchéité périphérique (3) d'un côté tourné vers la pièce,
dans lequel une extension en profondeur (TE) de la lèvre d'étanchéité (3) diminue du fait de l'usure lors de l'utilisation de l'organe de préhension à dépression (1 ; 21),
dans lequel l'atteinte d'un degré d'usure critique (Vₖᵣᵢₜ) de la lèvre d'étanchéité (3) est surveillée au moyen de mesures électriques,
dans lequel un paramètre qui dépend de manière continue de l'extension en profondeur (TE) de la lèvre d'étanchéité (3) est déterminé au moyen des mesures électriques,
et dans lequel le degré d'usure actuel (V) de la lèvre d'étanchéité (3) est déterminé à partir de ce paramètre,
caractérisé en ce
dans le cadre des mesures électriques, une résistance électrique (R) de la lèvre d'étanchéité (3) le long d'au moins une partie de sa périphérie est déterminée en tant que paramètre.

2. Procédé de fonctionnement d'un organe de préhension à dépression (1 ; 21), comprenant un corps d'aspiration (2) qui présente une lèvre d'étanchéité périphérique (3) d'un côté tourné vers la pièce,
dans lequel une extension en profondeur (TE) de la lèvre d'étanchéité (3) diminue du fait de l'usure lors de l'utilisation de l'organe de préhension à dépression (1 ; 21),
dans lequel l'atteinte d'un degré d'usure critique (Vₖᵣᵢₜ) de la lèvre d'étanchéité (3) est surveillée au moyen de mesures électriques,
dans lequel un paramètre qui dépend de manière continue de l'extension en profondeur (TE) de la lèvre d'étanchéité (3) est déterminé au moyen des mesures électriques,
et dans lequel le degré d'usure actuel (V) de la lèvre d'étanchéité (3) est déterminé à partir de ce paramètre,
caractérisé en ce
dans le cadre des mesures électriques, une capacité ou une inductance (L) dans un circuit de mesure (23) est mesurée en tant que paramètre,
au moins des parties du circuit de mesure (23) étant disposées assez près de la lèvre d'étanchéité (3) pour que l'extension en profondeur (TE) de la lèvre d'étanchéité (3) influence la capacité ou l'inductance (L) dans le circuit de mesure (23).

3. Procédé selon la revendication 1 ou 2, **caractérisé en ce que** le degré d'usure actuel (V) de l'organe de préhension à dépression (1 ; 21) est affiché en permanence.

4. Procédé selon l'une des revendications précédentes, **caractérisé en ce que** le degré d'usure actuel (V) est déterminé sous la forme d'un pourcentage qui indique une durée de vie consommée ou restante ou un nombre de processus de préhension (GP) de l'organe de préhension à dépression (1 ; 21) par rapport à une durée de vie maximale ou un nombre de processus de préhension maximal de l'organe de préhension à dépression (1 ; 21).

5. Procédé selon l'une des revendications précédentes, **caractérisé en ce que** lorsque le degré d'usure critique (Vₖᵣᵢₜ) est atteint, un signal est émis, en particulier un signal optique et/ou acoustique et/ou électrique et/ou électromagnétique.

6. Procédé selon l'une des revendications précédentes, **caractérisé en ce que** l'occupation actuelle de l'organe de préhension à dépression (1 ; 21) avec une pièce (4) est surveillée en plus.

7. Procédé selon la revendication 6, **caractérisé en ce que** la surveillance de l'occupation actuelle de l'organe de préhension à dépression (1 ; 21) avec une pièce (4) est réalisée par le biais des mesures électriques du paramètre, en particulier par une comparaison du paramètre avant et après une préhension programmée d'une pièce (4).

8. Procédé selon la revendication 6, **caractérisé en ce que** la surveillance de l'occupation actuelle de l'organe de préhension à dépression (1 ; 21) avec une pièce (4) est réalisée par le biais d'autres mesures électriques, en particulier la préhension d'une pièce (4), laquelle présente une surface électriquement conductrice, fermant un contact électrique sur l'organe de préhension à dépression (1 ; 21).

9. Procédé selon l'une des revendications précédentes, **caractérisé en ce que** l'interruption d'un fil de signalisation (25) périphérique dans ou sur la lèvre d'étanchéité (3) est surveillée en plus.

10. Procédé selon l'une des revendications précédentes,
**caractérisé en ce**
a) **que** le paramètre ou un signal de mesure associé et/ou le degré d'usure actuel (V) ou un signal de mesure associé est transmis à un dispositif de commande électronique (E),
b) **que** le dispositif de commande électronique (E) contrôle si l'organe de préhension à dépression (1 ; 21) est apte à exécuter complètement une tâche à accomplir, un degré d'usure prévisionnel de l'organe de préhension à dépression (1 ; 21) étant déterminé à partir du degré d'usure actuel (V) de l'organe de préhension à dépression (1 ; 21) et d'une modification de degré d'usure à attendre en cas d'exécution complète de la tâche, lequel est comparé avec le degré d'usure critique (Vₖᵣᵢₜ),
c) et **que**, si l'organe de préhension à dépression (1 ; 21) n'est pas apte à exécuter complètement la tâche à accomplir, le dispositif de commande (E) émet un message d'erreur et/ou refuse d'exécuter la tâche à accomplir.

11. Procédé selon la revendication 10, **caractérisé en ce**
**que** des informations sur les caractéristiques de l'organe de préhension à dépression (1 ; 21), telles que la forme de construction de l'organe de préhension à dépression (1 ; 21), les dimensions, la force portante, la force transversale et/ou le couple de basculement, sont également connues dans le dispositif de commande électronique (E),
les informations sur les caractéristiques étant en particulier stockées dans ou sur l'organe de préhension à dépression (1 ; 21) et de là transmises au dispositif de commande électronique (E),
et **qu'**à l'étape b), on vérifie aussi si les caractéristiques de l'organe de préhension à dépression (1 ; 21) sont adaptées à l'exécution de la tâche à accomplir.

12. Procédé selon l'une des revendications 10 ou 11, **caractérisé en ce**
**que** le dispositif de commande électronique (E) pour un cadre à dépression (41), sur lequel plusieurs organes de préhension à dépression (1 ; 21) sont disposés, contrôle si le cadre à dépression (41), d'après son état actuel, est apte à exécuter la tâche à accomplir,
l'état actuel comprenant en particulier le nombre et les positions des organes de préhension à dépression (1 ; 21), leurs degrés d'usure actuels (V) et leurs caractéristiques,
et **que** le dispositif de commande électronique (E) émet un message d'erreur et/ou refuse d'exécuter la tâche si le cadre à dépression (41), d'après son état actuel, n'est pas apte à exécuter la tâche à accomplir.

13. Procédé selon la revendication 12, **caractérisé en ce que** si le cadre à dépression (41), d'après son état actuel, n'est pas apte à exécuter la tâche à accomplir, le dispositif de commande électronique (E) émet une proposition pour une intervention de l'opérateur, après réalisation de laquelle le cadre à dépression (41) serait apte à exécuter la tâche.

14. Agencement d'organe de préhension à dépression, comprenant
- un organe de préhension à dépression (1 ; 21) avec un corps d'aspiration (2), lequel présente une lèvre d'étanchéité périphérique (3) de son côté tourné vers la pièce,
- et des moyens pour mettre en oeuvre un procédé selon l'une des revendications précédentes, lesquels comprennent un dispositif de commande électronique qui détermine le degré d'usure.

15. Agencement d'organe de préhension à dépression selon la revendication 14 en liaison avec la revendication 1, **caractérisé en ce que** la lèvre d'étanchéité (3) présente sur sa périphérie, à l'exception d'un segment d'interruption isolant (7), un matériau électriquement conducteur, et qu'un contact de mesure (6c, 6d) pour la mesure de la résistance électrique (R) est disposé dans ou sur la lèvre d'étanchéité (3) respectivement de part et d'autre du segment d'interruption (7).

16. Agencement d'organe de préhension à dépression selon la revendication 14 en liaison avec la revendication 1, **caractérisé en ce que** la lèvre d'étanchéité (3) présente un matériau électriquement conducteur sur toute sa périphérie, et que deux contacts de mesure (6a, 6b) pour la mesure de la résistance électrique (R) sont disposés à l'opposé l'un de l'autre dans ou sur la lèvre d'étanchéité (3).

17. Agencement d'organe de préhension à dépression selon la revendication 14 en liaison avec la revendication 2, **caractérisé en ce qu'**une couche intermédiaire électriquement conductrice (22) est intégrée dans l'organe de préhension à dépression (1 ; 21) en tant que partie du circuit de mesure (23).

18. Agencement d'organe de préhension à dépression selon la revendication 17, **caractérisé en ce que** la couche intermédiaire (22) est réalisée approximativement en forme de disque ou approximativement en forme d'anneau.

19. Agencement d'organe de préhension à dépression selon l'une des revendications 14 à 18, **caractérisé en ce que** la lèvre d'étanchéité (3) comprend un élastomère chargé de particules métalliques, en particulier de particules métalliques ferromagnétiques, ou de particules de graphite.
